# EUROPÄISCHE PATENTANMELDUNG

(11) **EP 0 953 551 A1**
(43) Veröffentlichungstag der Anmeldung: **03.11.1999**
(21) Anmeldenummer: 99108321.3
(22) Anmeldetag: 28.04.1999
(51) Int. Cl.: C04B 14/24, E06B 1/24, E06B 5/08, E04G 21/14

(54) **Betonfertigteil**

(30) Priorität: 29.04.1998 DE 29807718 U
(71) Anmelder: HM-Betonfertigteilwerk Hans Mauthe GmbH & Co. KG, 88319 Aitrach (DE)
(72) Erfinder: Schmelzer, Wilhelm, 87763 Lautrach (DE)
(74) Vertreter: Pfister, Helmut, Dipl.-Ing.

(57) **Zusammenfassung**

Die Erfindung betrifft ein Betonfertigteil, insbesondere ein Kellerfenstergewände, einen Kellerlichtschacht oder einen Fensterrahmen beziehungsweise ähnliche Betonfertigteile, wobei das Betonfertigteil vorzugsweise aus einem zementgebundenen Beton besteht und wobei vorgesehen ist, daß als Zuschlagstoff Blähglas verwendet wird.

## Beschreibung

Die Erfindung betrifft ein Betonfertigteil, insbesondere ein Kellerfenstergewände, einen Kellerlichtschacht, einen Fensterrahmen oder dergleichen, wobei das Betonfertigteil vorzugsweise aus einem zementgebundenen Beton besteht.

Beton wird aus Zement, Wasser und Zuschlägen (gegebenenfalls auch mit Betonzusatzmittel durchmischt) in Zwangsmischern hergestellt. Es ist bekannt, bestimmte Betoneigenschaften durch unterschiedliche Zusammensetzungen zu erreichen. Als Zuschlagsstoffe sind zum Beispiel sogenannte Leichtzuschläge wie Naturbims, Hüttenbims, Blähton oder Blähschiefern bekannt. Diese Materialien besitzen eine trockene Rohdichte von höchstens 2,2 t/m³.

Die Verwendung von Betonzuschlägen, insbesondere mit Lufteinschlüssen, wie zum Beispiel Blähton, ist auch im Hinblick auf die Wärmeisolierung von Vorteil.

Des weiteren ist bekannt, daß ein optimaler Beton bei einem Wasser-Zement-Wert von 0,4 erreicht wird. Nachteilig bei den Leichtbetonen, bei welchen Blähton als Zusatzstoff verwendet wird, ist, daß der Blähton auf Grund seiner porigen Ausgestaltung Wasser aufnimmt bzw. einschließt, was bei der Zusetzung von Wasser, im Hinblick auf den optimalen Wasser-Zement-Wert, zu berücksichtigen ist. Trotzdem ist es möglich, daß der Blähton Wasser zurückhält, wodurch die Frostsicherheit eines solchen Betones beeinträchtigt sein kann.

Es ist auch bekannt, daß die Wärmedämmung direkt proportional zur Dichte des Betons ist. Gleichzeitig jedoch ist die Festigkeit des Betons indirekt proportional zur Dichte. Dies bedeutet, daß bei zunehmender Wärmedämmung die Festigkeit des Betons abnimmt, was unerwünscht ist.

Der Erfindung hat es sich zur Aufgabe gemacht, die Wärmedämmung eines Betonfertigteiles, wie eingangs beschrieben, zu verbessern. Gleichzeitig sollte die Herstellung des Betonfertigteiles einfach möglich sein und ein ausreichend stabiles bzw. belastbares Betonfertigteil geschaffen werden.

Gelöst wird diese Aufgabe durch ein Betonfertigteil wie eingangs beschrieben, bei welchem als Zuschlagstoff Blähglas vorgesehen ist.

Bei Blähglas handelt es sich zum Beispiel um einen aus Recyclingglas gewonnenen Zuschlagstoff. Blähglas zeichnet sich durch verhältnismäßig gute Festigkeit und sehr gute Dämmeigenschaften aus. Blähglas besteht hierbei aus einer Mischung aus verschiedenen Mineralien bzw. Oxyde von Mineralien wie Siliciumoxyd (SiO), Dinatriumoxyd (Na₂0), Saphir (Al₂O₃) und Kalziumoxyd (CaO) und gegebenenfalls weitere Mineralien. Die Rezeptur für die Herstellung des Blähglases kann zwischen den verschiedenen vorgenannten Oxyden variiert werden. Es können auch weitere Mineralien zugesetzt werden.

Durch den Einsatz dieses Materials wird nicht nur die Eigenschaft der daraus gefertigten Betonfertigteile verbessert, sondern auch gleichzeitig ein aktiver Beitrag zur Abfallverwertung geleistet, da das Recyclingglas einer neuen Verwendung zugeführt wird. Natürlich ist es möglich neben dem Einsatz von Recyclingglas neues Glas zu verwenden.

Es ist von Vorteil, wenn bis zu 90 Masseprozent des Betons aus Blähglas bestehen. Das Blähglas wird hierbei zum Beispiel in Form von Granulat mit unterschiedlichen Sieblinien eingesetzt. Das Blähglas wird als Zuschlagstoff in die Zementmatrix des Betons eingebaut. Bei entsprechender geschickter Wahl der Körnungen des Zuschlagstoffes ist es möglich, einen hohen Anteil des Betons durch Blähglas zu bilden. Daraus resultieren auch Kostenvorteile, da das Blähglas als Abfallstoff günstig herstellbar ist.

Des weiteren ist es von Vorteil, wenn das Betonfertigteil dünnwandig ist, insbesondere Wandstärken bis zu fünf Zentimeter aufweist. Die Verwendung von Blähglas ist insbesondere im Hinblick auf die Festigkeit des damit erzeugten Betonfertigteils zu beachten. Auf Grund der hohen Festigkeit des Blähglases ist es möglich die Wandstärke des Betonfertigteiles entsprechend zu reduzieren, um die gleiche Stabilität zu erhalten als bei herkömmlicher Herstellung. Hieraus resultieren Vorteile bei dem Transport des Betonfertigteiles, da die daraus erstellten Betonfertigteile leichter werden. Neben Vorteilen bei der Festigkeit werden aber auch dünnwandigere Bauteile erreicht, wodurch insbesondere neue Einsatzbereiche für Betonfertigteile erschlossen werden. Es ist möglich, verhältnismäßig dünnwandige Fensterrahmen oder ähnliche Betonfertigteile zu realisieren, die trotzdem eine ausreichende Stabilität bei verhältnismäßig geringem Gewicht aufweisen.

In einer vorteilhaften Variante der Erfindung ist vorgesehen, daß die Außenflächen und/oder die Kante des Betonfertigteiles aus Beton mit Blähglas besteht. Durch die Verwendung von Blähglas ist es möglich, besonders feine und filigrane Anschläge zu formen. Durch die leichte Verarbeitbarkeit, vor allem bei Kanten und Anschlägen, läßt sich eine stark verbesserte Optik erreichen. Insbesondere kann auch durch die erhöhte Stabilität auf den Einsatz von Metallschienen und dergleichen zur Armierung und Formung der Kanten verzichtet werden. Das Ausreissen von Beton, insbesondere an Anschlagflächen oder dergleichen, wird ebenfalls reduziert, so daß auch Fensterrahmen oder andere, im Querschnitt komplexere (mit mehreren Abwinkelungen etc.) Betonfertigteile mit hoher Güte und hoher Stabilität hergestellbar sind. Durch die erfindungsgemäße Ausgestaltung wird erreicht, daß der aufwendige zusätzliche Einbau von Metallschienen vermieden wird, ohne dabei die Qualität der Betonfertigteile an den sensiblen Flächen oder Kanten zu beeinträchtigen. Hierdurch wird ein Herstellungsvorteil erreicht.

In einer Variante der Erfindung ist auch vorgesehen, daß dem Beton bei der Herstellung des Betonfertigteils ein Fließmittel, insbesondere Melaninharz, zugesetzt ist. Das Betonfertigteil wird üblicherweise in Negativschalungen hergestellt. Durch die Verwendung von Fließmitteln, wie zum Beispiel Melaninharz, wird das Einbringen des Betons in die Negativschalen, insbesondere wenn diese sehr eng ausgebildet sind, um verhältnismäßig dünnwandige Betonfertigteile zu erzeugen, deutlich erleichtert. Es ist hierbei gefunden worden, daß es von Vorteil ist, wenn bis zu einem Gewichtsprozent, vorzugsweise 0,2 Gewichtsprozent, Fließmittel, bezogen auf das Zementgewicht, zugesetzt sind.

In einer weiteren Variante der Erfindung ist vorgesehen, das Blähglas als Granulat mit einer Korngröße von 0,1 bis 32 Millimeter Durchmesser, bevorzugt 0,5 bis 8 Millimeter und mit einer Wärmeleitfähigkeit von 0,01 bis 0,1 W/(mK), auszubilden. Entsprechend den Vorschriften für die Verwendung von Zuschlagstoffen ist es möglich, das Granulat in verschiedenen Sieblinien einzusetzen. Bei entsprechender Wahl der verschiedenen Granulatarten wird dabei eine optimale Schüttung erreicht, wodurch der Einsatz von Zement entsprechend reduziert werden kann. Es ist auch möglich, das Granulat verhältnismäßig fein zu vermahlen, wodurch eine Korngröße von circa 0,1 Millimeter entsteht.

Blähglas zeichnet sich insbesondere durch eine sehr geringe Wärmeleitfähigkeit aus. Es ist zum Beispiel bekannt, daß Normalbeton eine Wärmeleitfähigkeit von circa 2,1 W/(mK) hat. Dieser hat dabei eine Dichte von circa 2,2 t/m³. Durch den erfindungsgemäßen Einsatz von Blähglas als Zusatzstoff wird die Wärmeleitfähigkeit deutlich verschlechtert, also die Wärmedämmung verbessert, bei ähnlich guten mechanischen Eigenschaften.

Des weiteren ist es günstig, wenn in dem Betonfertigteil ein oder mehrere Verbindungs- bzw. Transportmittel vorgesehen ist/sind. Das Betonfertigteil wird zum Beispiel mit anderen Betonfertigteilen oder anderen Bauelementen verbunden. Hierzu weist das Betonfertigteil entsprechende Verbindungsmittel, wie zum Beipiel Hülsen oder andere Vorrichtungen, zum Anschlagen entsprechender Verbindungselemente auf. Zum Beispiel kann eine entsprechendes Zugelement in eine Hülse eingesetzt oder eingedreht werden.

Außerdem ist es bekannt, an dem Betonfertigteil entsprechende Transportmittel anzuordnen, die den Transport des Betonfertigteiles erlauben. Dies können zum Beispiel entsprechend ausgebildete Anker sein, die einen Tragkopf aufweisen, um mit einem entsprechenden Hebezeug verbunden zu werden. Günstigerweise ist auch vorgesehen, daß ein Verbindungs- bzw. Transportmittel beide Funktionen übernimmmt.

Insbesondere wird eine Hülse als Transport- und Verbindungsmittel verwendet, die ein Innengewinde aufweist und auf das eine Seilschlaufe aufgepresst ist. Die Seilschlaufe dient hierbei als Verankerungselement in dem Betonfertigteil. Es ist hierbei gefunden worden, daß sich die Seilschlaufe optimal in der Beton-Blähglasmatrix einbinden läßt und so das Verbindungsbeziehungsweise Transportmittel optimal im Betonfertigteil hält. Gleichzeitig ist die Verwendung eines so ausgebildeten Verbindungs- beziehungsweise Transportmittels günstig, da mit einem Mittel zwei beziehungsweise mehrere Funktionen erfüllt werden können und gleichzeitig die verwendete Hülse mit einer aufgepreßten Seilschlaufe als Massenprodukt günstig herstellbar ist.

Neben der Verwendung einer Seilschlaufe, die auf der Hülse aufgepreßt ist, ist es auch möglich, mehrere Seilschlaufen an einer Hülse anzuordnen um eine entsprechend bessere Verankerung des Transport- beziehungsweise Verbindungsmittels in dem Betonfertigteil zu erreichen.

Es ist dabei vorgesehen, daß das Betonfertigteil als Kellerfenstergewände bzw. als Kellerlichtschacht ausgebildet ist, wobei diese beiden Elemente einzeln transportiert und gesetzt werden, aber hinterher durch Verbindungsmittel miteinander verbunden werden. Hierzu ist es bekannt, diese zum Beispiel hülsenartig auszugestalten.

Auch der Fensterrahmen für ein Kellerfenster kann auf diese Weise hergestellt werden, wobei dann ebenfalls die Transporthülse zur Verbindung mit dem Kellerfenstergewände dient.

Der erfindungsgemäße Vorschlag erlaubt es , bei hervorragenden Wärmedämmeigenschaften und ausreichenden statischen Eigenschaften, die Wandstärken entsprechend zu reduzieren. Da auch die reduzierten Wandstärken die Verbindungs- und Transportmittel aufnehmen, die gleichzeitig die ganze Last des Betonfertigteils, zum Beispiel in das Hebemittel, einleiten, müssen entsprechende Grenzen der Druckfestigkeit beachtet werden. In diesem Zusammenhang ist es günstig, daß das Verbindungs- bzw. Transportmittel mit einem Flächenanker ausgestattet ist, mit welchem die Übergangsflächen zwischen dem Mittel und dem Betonfertigteil deutlich erhöht wird, um somit höhere Lasten über diese Mittel zu übertragen. Durch eine entsprechende Ausgestaltung dieses Flächenankers, der zum Beispiel weit in das Betonfertigteil reicht, erreicht man, daß die spezifische Last unterhalb der Druckfestigkeitsgrenze abgesenkt werden kann, weshalb beim Anheben des Betonfertigteiles mit einem entsprechend ausgebildeten Flächenanker ein Abreißen des Betonfertigteiles an dieser Stelle sicher vermieden wird.

Der Flächenanker, der zum Beispiel als Fächeranker ausgestattet ist, weist ein Stahlgitter oder sonstiges flächiges Gebilde auf. An diesem ist das Verbindungsmittel, der Anker, die Hülse oder der gleichen, befestigt, zum Beispiel angeschweißt.

In der Zeichnung ist die Erfindung schematisch dargestellt.

Es zeigen:
- Fig. 1: in einer Frontansicht ein erfindungsgemäßes Betonfertigteil,
- Fig. 2: in einer Frontansicht ein Detail des erfindungsgemäßen Fertigteils,
- Fig. 3: eine perspektivische Aussicht eines Fensterrahmens als erfindungsgemäßes Betonfertigteil,
- Fig. 4: einen Vergrößerung der Hülse nach Fig. 3 und
- Fig. 5: einen vertikalen Schnitt durch eine weitere Variante eines erfindungsgemäßen Betonfertigteils.

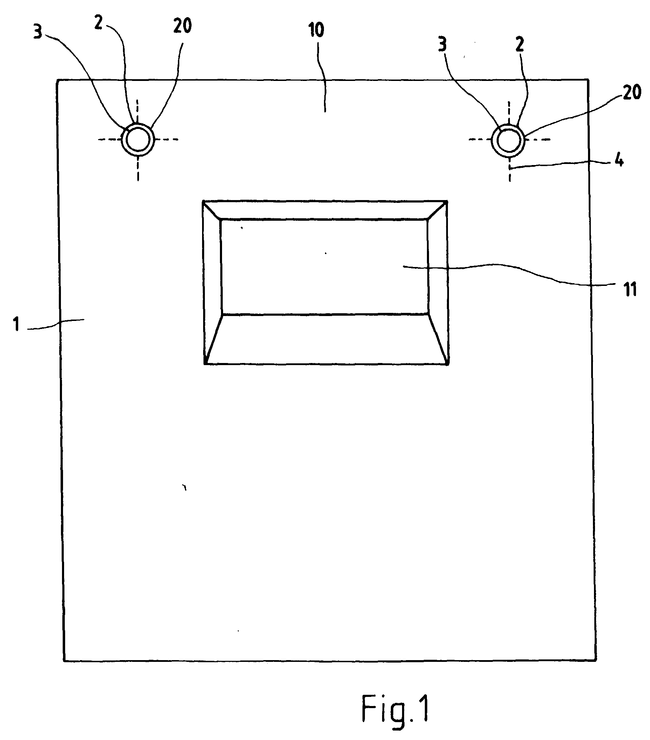

Figur 1 zeigt ein Betonfertigteil 1, welches zum Beipiel als Kellerfenstergewände 10 ausgebildet ist. Hierzu weist das Betonfertigteil 1 eine Fensteröffnung 11 auf, in die ein entsprechendes Kellerfenster eingesetzt werden kann. Im oberen Bereich des Betonfertigteils 1 sind zwei Befestigungsmittel 2 vorgesehen, die hülsenartig 20 ausgestaltet sind.

Diese Hülsen 20 dienen nicht nur als Befestigungsmittel 2, sondern auch als Tranportmittel 3, wenn das Betonfertigteil 1 zum Beispiel aus dem Betonteilwerk auf den Fahrzeuganhänger gesetzt wird oder von dem Anhänger an der Baustelle abgehoben wird. Die Hülse 20 nimmt dabei zum Beispiel eine entsprechende Tragstange auf, durch die der Gegenstand mit dem Hebemittel verbindbar ist.

Das Befestigungsmittel 2 dient aber auch dazu, daß an diesem ein weiteres Betonfertigteil befestigt wird. Zum Beipiel ist vorgesehen, daß an dem Kellerfenstergewände 10 ein Kellerlichtschacht (nicht dargestellt) mit Hilfe der Befestigungsmittel 2 befestigt wird. Der Kellerlichtschacht wird zum Beipiel an dem Befestigungsmittel 2 eingehängt bzw. mit diesem verschraubt.

Ebenso ist der Fensterrahmen 12 in die Fensteröffnung 11 einsetzbar, wobei dann wiederum die Transportmittel 3 als Befestigungsmittel 2 dienen.

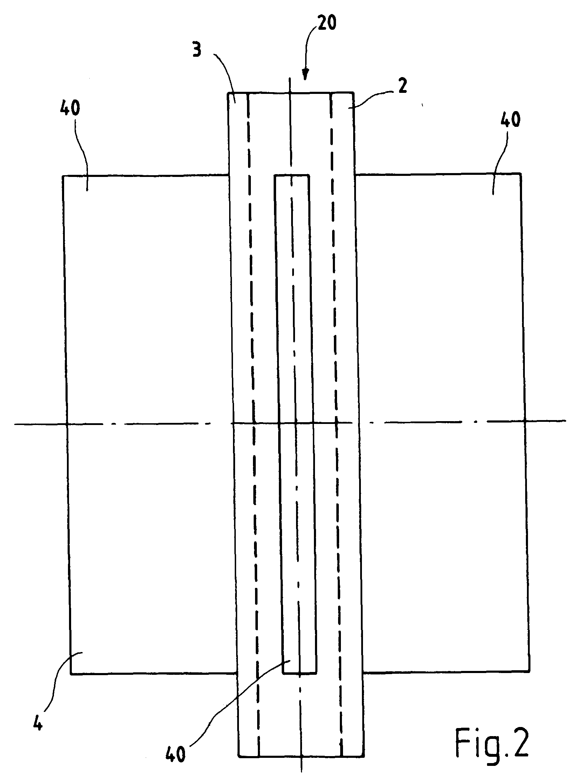

Erfindungsgemäß wird vorgeschlagen, das Betonfertigteil aus einem Beton herzustellen, der einen verhältnismäßig hohen Anteil an Blähglas als Zuschlagstoff enthält. Dadurch resultieren zum Beispiel verhältnismäßig dünnwandige Betonfertigteile. Um eine ausreichende Stabilität sowohl beim Transport als auch bei der Befestigung mit anderen Elementen zu erreichen, schlägt die Erfindung vor, daß das Befestigungs- bzw. Transportmittel 2,3 fächerartig ausgestaltet ist, insbesondere einen Flächenanker 4 besitzt. Dies ist insbesondere in Figur 2 dargestellt. Die Hülse 20 weist an ihrem Umfang mehrere, in dem vorgestellten Beipiel zum Beispiel vier Flächen 40 auf, die in radialen Abstand von 90° zueinander, parallel zur Hülsenachse, angeordnet sind. Diese Flächen 40 sind zum Beispiel aus Blech, Lochblech, Gitter oder dergleichen gefertigt. Durch eine solche flächige Ausgestaltung des Ankers 4 wird die spezifische Belastung des Ankers unter die Grenze der Druckfestigkeit des Betonfertigteils gesenkt. Je nach Anforderungsprofil ist es möglich, den Flächenanker 4 mit nur einer oder mit mehreren Flächen auszustatten. Natürlich ist es möglich, durch die entsprechende Ausgestaltung der Fläche 40 die spezifische Druckbelastung entsprechend einzustellen.

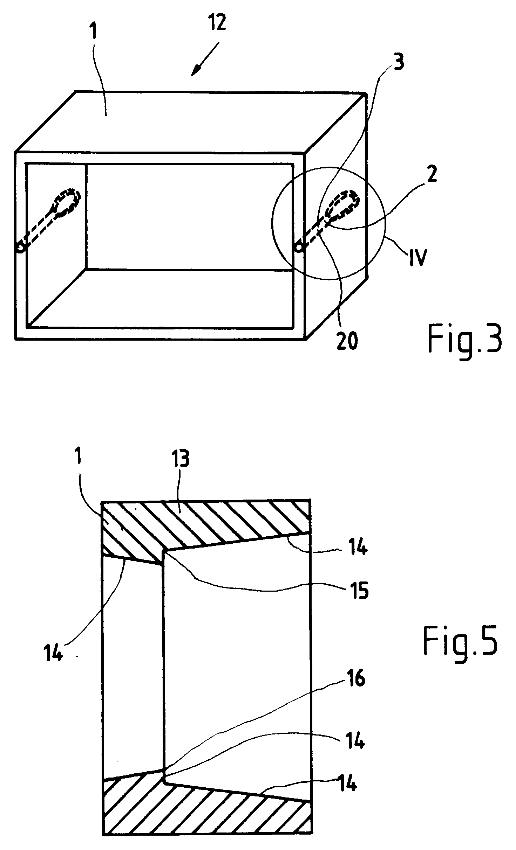

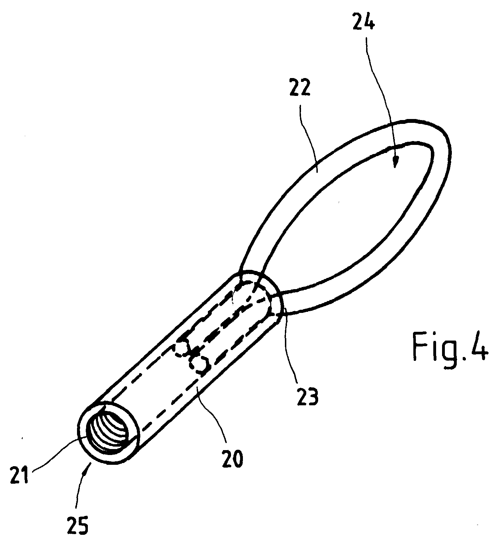

In Fig. 4 ist eine Variante eines Transport- beziehungsweise Befestigungsmittels 2,3 gezeigt. Die Hülse 20 weist dabei ein Innengewinde 21 auf, in das die Seilschlaufe 22 eingepresst ist. Die Seilschlaufe 22 besteht aus Drahtseil und schließt mit dem Hülsenende 23 ab. Die Seilschlaufe 22 befindet sich hierbei in dem Betonfertigteil 1, wie dies zum Beispiel in Fig. 3 angedeutet ist. Die Hülse 20 weist an ihrem innenliegendem Ende die Seilschlaufe 22 auf. Die Hülse 20 ist mit seiner Vorderseite 25 in dem Betonfertigteil zum Beispiel derart angeordnet, daß dieses vordere Ende zum Beispiel mit der Vorderseite des Betonfertigteiles 1 abschließt, um zum Beispiel mit einem entsprechendem Transportmittel (Hebezeug eines Kranes) oder eines Verbindungsmittels (zum Beispiel Schraubbolzen für das Verbinden mit einem anderen Betonfertigteil) zugänglich zu sein.

In Fig. 3 ist ein erfindungsgemäßes Betonfertigteil gezeigt. Das Betonfertigteil ist hierbei zum Beispiel als Fensterrahmen angedeutet, wobei das Transport- beziehungsweise Befestigungsmittel 2, 3 in den vertikal verlaufenden Seitenwänden angeordnet ist. Die durch die Seilschlaufe 22 gebildete Öse 24 ist, wie das übrige Betonfertigteil, mit Beton zuzüglich dem Zuschlagstoff Blähglas ausgefüllt. Dadurch wird eine optimale Krafteinleitung der Kraft in das Betonfertigteil erreicht.

In Fig. 5 ist ein Kellerfenstergewände 13 als Betonfertigteil 1 schematisch dargestellt. Gerade bei einem solchen Betonfertigteil, wobei es auf die Ausgestaltung der Flächen 14 und Kanten 16 beziehungsweise Winkel 15 ankommt, da in diesen andere Elemente, zum Beispiel ein Kellerfenster oder dergleichen, anliegt, tritt der Vorteil der Erfindung zutage. Die Fläche 14 beziehungsweise der innenliegende Winkel 15 besteht erfindungsgemäß aus Beton, der mit Blähglas als Zuschlagstoff ausgestattet ist. Dadurch ist es möglich, verhältnismäßig filigrane Außenflächen 14, Spitzen, Winkel 15, Kanten 16, Profile oder Winkelleisten 15 zu bilden, die ohne zusätzliche Armierungen, wie Metallschienen oder dergleichen, ausgestaltet sind. Dabei sind diese Elemente einfach herstellbar, und gleichzeitig im Gebrauch gut einsetzbar, da die erfindungsgemäße Ausgestaltung eine hohe Stabilität bietet.

Die Verwendung einer Hülse 20 mit Innengewinde 21, wie in Fig. 4 dargestellt, hat auch den Vorteil, daß in diese Hülse entsprechende Elemente eingeschraubt werden können.

Als Zuschlagstoff für den Beton, aus welchen die erfindungsgemäßen Betonfertigteile 1 gefertigt werden, wird erfindungsgemäß der Einsatz von Blähglas vorgeschlagen. Blähglas wird dabei aus Recyclingglas hergestellt. Für eine möglichst optimale Ausgestaltung des Blähglases wird dabei folgende Zusammensetzung des Blähglases eingesetzt, unter der Maßgabe, daß die Summe der Bestandteile 100 Masseprozent erreicht.
SiO (60-80 Masseprozent),
Na₂0 (5-20 Masseprozent),
Al₂0₃ (0-5 Masseprozent),
Ca0 (0-15 Masseprozent),
Mg0 (0-10 Masseprozent).

Zusätzlich zu den vorgenannten Stoffen ist es möglich, folgende andere oxydische Mineralien beziehungsweise Zuschlagstoffe beizumengen.
K₂0, Fe₂0₃, SO₃, TiO₂, BaO.

Der Anteil dieser Materialien kann zwischen 0 und 5 Masseprozent betragen.

Das Blähglas besteht dabei zum Beispiel aus gas- beziehungsweise lufteingeschlossenen Kugeln oder sonstigen Körpern, die in einem Sinter- und Schäumungsverfahren hergestellt werden.

Die jetzt mit der Anmeldung und später eingereichten Ansprüche sind Versuche zur Formulierung ohne Präjudiz für die Erzielung weitergehenden Schutzes.

Die in den abhängigen Ansprüchen angeführten Rückbeziehungen weisen auf die weitere Ausbildung des Gegenstandes des Hauptanspruches durch die Merkmale des jeweiligen Unteranspruches hin. Jedoch sind diese nicht als ein Verzicht auf die Erzielung eines selbständigen, gegenständlichen Schutzes für die Merkmale der rückbezogenen Unteransprüche zu verstehen.

Merkmale, die bislang nur in der Beschreibung offenbart wurden, können im Laufe des Verfahrens als von erfindungswesentlicher Bedeutung, zum Beispiel zur Abgrenzung vom Stand der Technik beansprucht werden.

## Patentansprüche

1. Betonfertigteil, insbesondere ein Kellerfenstergewände, ein Kellerlichtschacht, ein Fensterrahmen oder dergleichen, wobei das Betonfertigteil vorzugsweise aus einem zementgebundenen Beton besteht, **dadurch gekennzeichent**, **daß** als Zuschlagstoff Blähglas vorgesehen ist.

2. Betonfertigteil nach Anspruch 1, **dadurch gekennzeichnet**, **daß** bis zu 90 Gewichtsprozent des Betons aus Blähglas bestehen.

3. Betonfertigteil nach einem oder beiden der vorhergehenden Ansprüche, **dadurch gekennzeichnet**, **daß** das Betonfertigteil dünnwandig ist, insbesondere Wandstärken bis zu fünf Zentimeter aufweist.

4. Betonfertigteil nach einem oder mehreren der vorhergehenden Ansprüche, **dadurch gekennzeichnet**, **daß** dem Beton bei der Herstellung des Betonfertigteils ein Fließmittel, insbesondere Menalinharz, zugesetzt ist.

5. Betonfertigteil nach einem oder mehreren der vorhergehenden Ansprüche, **daduch gekennzeichnet**, **daß** bis zu ein Gewichtsprozent, vorzugsweise 0,2 Gewichtsprozent Fließmittel, bezogen auf das Zementgewicht, zugesetzt ist.

6. Betonfertigteil nach einem oder mehreren der vorhergehenden Ansprüche, **daduch gekennzeichnet**, **daß** das Blähglas als Granulat mit einer Korngröße von 0,1 bis 32 Millimeter Durchmesser, bevorzugt 0,5 bis 8 Millimeter und mit einer Wärmeleitfähigkeit von 0,01 bis 0,1 W/(mK), ausgebildet ist.

7. Betonfertigteil nach einem oder mehreren der vorhergehenden Ansprüche, **dadurch gekennzeichnet**, **daß** in dem Betonfertigteil (1) ein oder mehrere Verbindungs- bzw. Transportmittel (2,3) vorgesehen ist/sind.

8. Betonfertigteil nach einem oder mehreren der vorhergehenden Ansprüche, **dadurch gekennzeichnet, daß** das Verbindungs- bzw. Transportmittel (2,3) hülsenartig (20) ausgebildet ist.

9. Betonfertigteil nach einem oder mehreren der vorhergehenden Ansprüche, **dadurch gekennzeichnet**, **daß** die Hülse ein Innengewinde aufweist, auf das eine Seilschlaufe aufgepresst ist.

10. Betonfertigteil nach einem oder mehreren der vorhergehenden Ansprüche, **dadurch gekennzeichnet**, **daß** das Verbindungs- bzw. Transportmittel (2,3) mit einem Flächenanker (4,40) ausgestattet ist.

11. Betonfertigteil nach einem oder mehreren der vorhergehenden Ansprüche, **dadurch gekennzeichnet**, **daß** die Außenfläche (14) und/oder die Kante (16) beziehungsweise der Winkel (15) des Betonfertigteiles (1, 13) aus Beton mit Blähglas besteht.
